(19) Europäisches Patentamt
European Patent Office
Office européen des brevets

(11) **EP 3 176 429 B1**

(12) **EUROPEAN PATENT SPECIFICATION**

(45) Date of publication and mention
of the grant of the patent:
**08.08.2018   Bulletin 2018/32**

(51) Int Cl.:
***F03D 9/30*** *(2016.01)*     ***B63B 35/44*** *(2006.01)*

(21) Application number: **15382598.9**

(22) Date of filing: **01.12.2015**

(54) **FLOATING STRUCTURE FOR OFFSHORE WIND TURBINE APPLICATIONS**

SCHWIMMENDE STRUKTUR FÜR OFFSHORE-WINDTURBINENANWENDUNGEN

STRUCTURE FLOTTANTE POUR DES APPLICATIONS DE TURBINE ÉOLIENNE OFFSHORE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.06.2017   Bulletin 2017/23**

(73) Proprietor: **GE Renewable Technologies Wind
B.V.**
**4817 PA Breda (NL)**

(72) Inventors:
• **AGUILÓ PÓRTULAS, Borja**
**20011 DONOSTIA (ES)**

• **LANCA COELHO, Miguel**
**08005 BARCELONA (ES)**
• **MENÉNDEZ ÁLVAREZ, Elena**
**08005 BARCELONA (ES)**

(74) Representative: **ZBM Patents - Zea, Barlocci &
Markvardsen**
**Plaza Catalunya, 1 2nd floor**
**08002 Barcelona (ES)**

(56) References cited:
**EP-A1- 2 639 452       WO-A2-2010/021655
WO-A2-2011/057940   US-A1- 2015 308 068**

## Description

The present disclosure relates to floating structures for offshore wind turbine applications.

## BACKGROUND

Offshore floating wind turbines are mounted on floating structures that include a floating foundation comprising a hull. In order to ensure buoyancy, it is known in the art to form a number of structural watertight compartments within the hull so as to reduce risks when the hull is damaged and a leak occurs. However this adds extra weight and increases final overall cost. An example is known from WO2011/057940 A2. US6021730 discloses marine structures for use with floating docks, floating pipe lines, swim floats and the like. Such marine structure has a controllable buoyancy device that is arranged in the interior of a float drum that is divided into compartments inside of which a flotation substance such as foam is placed.

The marine structures disclosed in this document are intended for environments at or nearing atmospheric pressure and where the pressure may vary with temperature.

Thus, such structures are not however suitable for withstand extremely high pressures at considerable depths, as required by larger scale floating structures suitable for use as wind turbine foundations.

Yet another problem with existing float drums is the inability to control the pressure within the float drum. The pressure in the float drum is a function of the temperature of the float drum. In summer months, the float drum is exposed to higher temperatures, and in winter months, the float drum is exposed to lower temperatures. The temperature of the float directly affects the pressure within the float drum. Higher temperatures cause the gasses in the float drum to expand and lower temperatures cause the gasses to contract. This expansion and contraction of gasses can cause the interior of the float drum to become over pressurized or form a vacuum. Over pressurization can cause warping or buckling of the float drum. A vacuum in the float drum can cause warping, buckling and promote leakage of the float drum.

Another problem with existing float drums is the undesired growth within the float drums. Over time, algae, moss, microbes, etc. grow and live in the interior of the float drum. These organisms can cause damage to the float drum, damage to the interior components of the float drum, create unwanted odors, and create other unsanitary conditions.

For offshore wind turbine applications, a need therefore still exists for cost effective floating structures where the overall weight is optimized while ensuring stability.

## SUMMARY

A floating structure for offshore wind turbine applications is provided herein which at lest partially mitigates the problems inherent with the prior art and which also provides a number of advantages as it will described below. The present floating structure technology can be applied not only to offshore wind turbine floating structures but other floating substructure where stability should be ensured.

The floating structure described herein comprises a hull. In use, the hull includes an immersed section that defines at least one interior space therein. The hull may include a non-immersed section.

A foam material, such as for example a foam material comprising polyurethane, is provided. Such foam material is arranged so as to at least partially fill said at least one interior space of the immersed section of the hull.

It may be preferred that the foam has one of more of the present characteristics: sufficient compressive strength to withstand hydrostatic pressure solicitations, low loss of buoyancy in prolonged contact with water, and low density. It may be for example low cost polyurethane foam. For example polyurethane foam having a density of for example 62 kg/m$^3$ may be used which also provides good properties for performing the intended function such as good durability, chemical stability when immersed in marine environments.

According to an important aspect of the present floating structure, the foam material has gradually varying characteristics of at least one of the following:

- foam density ($\rho F$);
- compressive strength ($F_C$); and
- reduction of buoyancy (RB).

The above gradually varying characteristics vary according to values of hydrostatic pressure (HP) acting on the hull at given depths. That is, at a given depth where the immersed section of the hull is placed, a corresponding hydrostatic pressure (HP) acts on the hull, and corresponding values for the above mentioned foam density ($\rho F$), compressive strength ($F_C$) and reduction of buoyancy (RB) define the characteristics of the foam at a given depth.

Thus, in the present floating structure, a foam gradient is provided having different characteristics according to the depth where foam is placed. The properties of the foam material are thus optimized according to the depth where parts of the floating structure are placed.

The foam is selected such as its density is defined as follows:

$$\rho_F = \left(\frac{1}{\alpha}\right) \cdot F_C + \beta$$

wherein

$\rho$F is the foam density in Kg/m$^3$;

$F_C$ is the compressive strength in MPa to be resisted according to the depth at which the hull interior space of the immersed section is located;

$\alpha$ is a proportionality constant ranging from 10 to 20, in MPa/ Kg/m$^3$; and

$\beta$ is a proportionality constant ranging from 10 to 20, in Kg/m$^3$.

It may be preferred to employ a foam material having a porosity of 95% or lower with a value of reduction of buoyancy (RB) below 1% for a minimum foam density ($\rho$F) of 60 Kg/m$^3$ after 30 days of immersion.

It has been found that with the present floating structure the costs involved in offshore wind turbine structures are advantageously reduced due to a reduction in steel parts and welds. In particular, some of the hull's internal stiffening elements can potentially be eliminated, the hull's shell wall sections could be reduced and the steel mechanical property requirements become less demanding. Moreover, hull compartments are reduced and even eliminated as they can be replaced with a structural filling material to reduce permeability. Also, the risk of capsizing is also reduced and eventually also the risk of potential sinking of parts such as the platform. The performance of the floating structure is improved particularly in terms of strength, reliability, redundancy and stability when withstanding solicitations such as hydrostatic pressures, bending moments, forces, inertial and buckling loads, thus a reduction of cost can be obtained.

For example, it has been found that when traditional spars with no compartments are damaged, they are filled up with a high amount of water which in the present example is of the order of 978 tons. In the present floating structure instead, when the full spar is damaged, it has been found that due to low permeability of the foam material only a relatively small amount of water of the order of 117 tons gets into the spar which is about 88% less water entering the spar. The risk of loss of stability, capsizing or sinking is thus highly reduced and the wind turbine performance is maintained even after a fluid ingress event occurs. As a consequence, maintenance and repair costs are greatly reduced since the platform of the structure does not need to be repaired after a fluid ingress event, depending on structural integrity.

Thus, by combining highly reliable water tightness and floatability while reducing or eliminating the need for steel parts in the present floating structure, great advantages are obtained.

The hull immersed section of the floating structure may comprise a number of interior spaces. Said interior spaces may be arranged in levels contained within different planes, such as for example, horizontal planes. The foam material may be arranged in at least one of said interior spaces.

An interior space of the hull immersed section may be intended to be at least partially filled with a material whose density is greater, for example at least one order of magnitude, than that of the foam density ($\rho$F). In some cases, said interior space of the hull immersed section intended to be at least partially filled with a material whose density is greater than that of the foam density ($\rho$F) may be arranged at a lower region of the immersed section.

In further examples of the present floating structure, the foam material may have a hollow portion formed therein. Still in additional examples, the exterior of the hull may be at least partially coated with the foam material. In other cases, the hull interior space might be also filled with a pressurized fluid. In further examples, the floating structure might comprise a fluid ingress sensing device.

Additional objects, advantages and features of examples of the present floating structure is will become apparent to those skilled in the art upon examination of the description, or may be learned by practice thereof.

BRIEF DESCRIPTION OF THE DRAWINGS

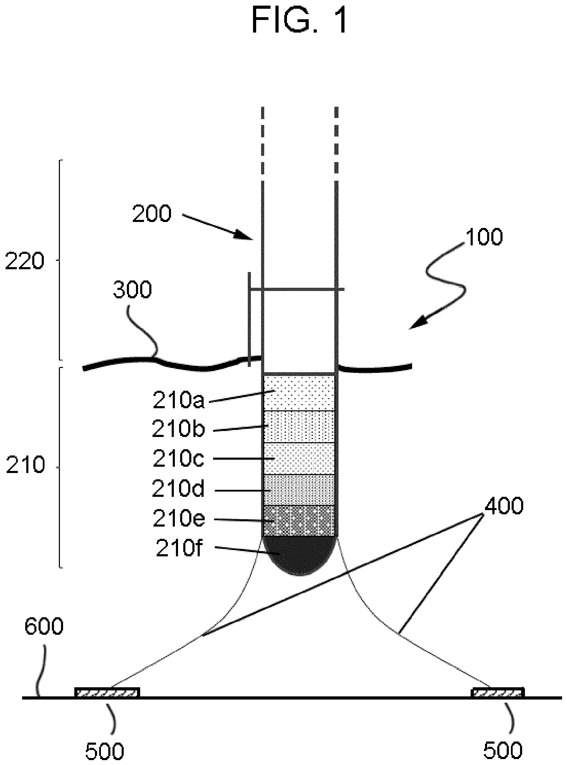

One particular embodiment of the present floating structure will be described in the following by way of a non-limiting example, with reference to the appended drawing, in which Figure 1 is a diagrammatic view of a floating structure for an offshore wind turbine.

DETAILED DESCRIPTION OF EXAMPLES

The floating structure shown in figure 1 has been indicated as a whole by reference numeral 100. The floating structure 100 is intended for offshore wind turbine applications. The floating structure 100 comprises a hull 200 that includes a hull immersed section 210 and a hull non-immersed section 220 according to mean sea level 300.

Mooring lines 400 connect an anchoring structure 500 on the seabed 600 to the floating structure 100.

A number of interior spaces 210a, 210b, 210c, 210d, 210e, 210f are formed inside the hull immersed section 210.

The interior spaces 210a, 210b, 210c, 210d, 210e, 210f of the hull immersed section 210 are arranged in levels contained within different horizontal planes. Said interior spaces 210a, 210b, 210c, 210d, 210e, 210f are at least partially filled with polyurethane foam. The polyurethane foam in this example has a foam density pF of 62 kg/m$^3$, a reduction of buoyancy RB after 30 day immersion in water of 1,05%, and a compressive strength $F_C$ of 0,7 MPa.Such polyurethane foam is selected to provide low loss of buoyancy in prolonged contact with water, good durability, as well as sufficient compressive strength to withstand hydrostatic pressure solicitations.

In each of the interior spaces 210a, 210b, 210c, 210d, 210e, 210f of the hull immersed section 210, the polyurethane foam has gradually varying density pF which is a function of at least one of the compressive strength $F_C$ and the reduction of buoyancy RB. Such characteristics gradually vary according to values of hydrostatic pressure HP acting on the hull 200 at given depths.

In the example shown in the figure, the interior space 210f of the arranged at a lower region of the hull immersed section 210 is filled with a material whose foam density is greater than that of the foam density pF in the rest of the interior spaces 210a, 210b, 210c, 210d, 210e of the hull immersed section 210. The position of the floating structure's centre of gravity is lower when this is implemented, enhancing the floating structure's stability.

Although only a number of particular embodiments and examples of the present floating structure have been disclosed herein, it will be understood by those skilled in the art that other alternative examples and/or uses and obvious modifications and equivalents thereof are possible.

Furthermore, the present disclosure covers all possible combinations of the particular examples described.

Thus, the scope of the present disclosure should not be limited by particular examples, but should be determined only by a fair reading of the claims that follow.

**Claims**

1.  Floating structure for offshore wind turbine applications, the structure comprising a hull which, in use, includes an immersed section defining at least one interior space therein, and a foam material arranged so as to at least partially fill the at least one interior space of the immersed section of the hull, with said foam material having gradually varying characteristics of at least one of foam density ($\rho$F), compressive strength ($F_C$) and reduction of buoyancy (RB) according to values of hydrostatic pressure (HP) acting on the hull at given depths.

2.  The structure of claim 1, wherein the hull immersed section comprises a number of interior spaces.

3.  The structure of claim 2, wherein the interior spaces are arranged in levels contained within different planes.

4.  The structure of claim 3, wherein said planes are horizontal.

5.  The structure of any of the claims 2-4, wherein the foam material is arranged in at least one of said interior spaces.

6.  The structure of any of the preceding claims, wherein an interior space of the hull immersed section is intended to be at least partially filled with a material whose density is greater than that of the foam density ($\rho$F).

7.  The structure of claim 6, wherein the interior space of the hull immersed section intended to be at least partially filled with a material whose density is greater than that of the foam density ($\rho$F) is arranged at a lower region of the immersed section.

8.  The structure of any of the preceding claims, wherein the foam material has a hollow portion formed therein.

9.  The structure of any of the preceding claims, wherein the exterior of the hull is at least partially coated with the foam material.

10. The structure of any of the preceding claims, wherein the hull interior space is also filled with a pressurized fluid.

11. The structure of any of the preceding claims, wherein the floating structure further comprises fluid ingress sensing device.

12. The structure of any of the preceding claims, wherein the foam material comprises polyurethane.

13. The structure of any of the preceding claims, wherein the foam density ($\rho$F) is selected to resist a determined compressive strength ($F_C$) in MPa according to the depth at which the hull interior space of the immersed section is located such that the foam density ($\rho$F) in Kg/m$^3$ meets

$$\rho_F = \left(\frac{1}{\alpha}\right) \cdot F_C + \beta \, ,$$

with $\alpha$ and $\beta$ ranging from 10 to 20.

14. The structure of any of the preceding claims, wherein the foam material has a value of reduction of buoyancy (RB) below 1% for a minimum foam density ($\rho$F) of 60 Kg/m$^3$ after 30 days of immersion.

15. The structure of any of the preceding claims, wherein the foam material has a porosity of 95% or lower.

**Patentansprüche**

1.  Schwimmende Struktur für Offshore-Windturbineanwendungen, wobei die Struktur einen Rumpf umfasst, der im Einsatz einen untergetauchten Abschnitt umfasst, der mindestens einen Innenraum darin definiert und einen Schaumstoff umfasst, der so angeordnet ist, um mindestens teilweise den mindestens einen Innenraum des untergetauchten Teils des Rumpfs zu füllen, wobei der Schaumstoff allmählich variierende Eigenschaften von mindestens einer aus Schaumdichte ($\rho$F), Druckfestigkeit ($F_c$) und Reduktion des Auftriebs (RB) gemäß Werten des auf den Rumpf auf gegebenen Tiefen wirkenden hydrostatischen Drucks (HP) aufweist.

**2.** Die Struktur des Anspruchs 1, wobei der untergetauchte Abschnitt des Rumpfs eine Anzahl von Innenräumen umfasst.

**3.** Die Struktur des Anspruchs 2, wobei die Innenräume auf innerhalb verschiedener Ebenen enthaltenen Niveaus angeordnet sind.

**4.** Die Struktur des Anspruchs 3, wobei die Ebenen horizontal sind.

**5.** Die Struktur von einem der Ansprüche 2-4, wobei der Schaumstoff in mindestens einem der Innenräume angeordnet ist.

**6.** Die Struktur von einem der vorhergehenden Ansprüche, wobei ein Innenraum des untergetauchten Abschnitts des Rumpfs mindestens teilweise mit einem Material zu füllen ist, dessen Dichte größer als die Schaumdichte ($\rho$F) ist.

**7.** Die Struktur des Anspruchs 6, wobei der Innenraum des untergetauchten Abschnitts des Rumpfs, der mindestens teilweise mit einem Material zu füllen ist, dessen Dichte größer als die Schaumdichte ($\rho$F) ist, in einem unteren Teil des untergetauchten Abschnitts angeordnet ist.

**8.** Die Struktur von einem der vorhergehenden Ansprüche, wobei der Schaumstoff einen darin gebildeten holen Teil hat.

**9.** Die Struktur von einem der vorhergehenden Ansprüche, wobei der Außenteil des Rumpfs mindestens teilweise mit dem Schaumstoff beschichtet ist.

**10.** Die Struktur von einem der vorhergehenden Ansprüche, wobei der Innenraum des Rumpfs auch mit einer Druckflüssigkeit gefüllt ist.

**11.** Die Struktur von einem der vorhergehenden Ansprüche, wobei die schwimmende Struktur weiterhin eine Vorrichtung umfasst, die das Eindringen von Flüssigkeit abfühlt.

**12.** Die Struktur von einem der vorhergehenden Ansprüche, wobei der Schaumstoff Polyurethan umfasst.

**13.** Die Struktur von einem der vorhergehenden Ansprüche, wobei die Schaumdichte (pF) ausgewählt ist, um einer bestimmten Druckfestigkeit ($F_c$) in MPa entsprechend der Tiefe zu widerstehen, auf der sich der Rumpfinnenraum des untergetauchten Abschnitts befindet, so dass die Schaumdichte ($\rho$F) in Kg/m$^3$

$$\rho F = \left(\frac{1}{\alpha}\right) \cdot Fc + \beta$$

erfüllt, wobei $\alpha$ und $\beta$ von 10 bis 20 reichen.

**14.** Die Struktur von einem der vorhergehenden Ansprüche, wobei der Schaumstoff einen Wert der Reduktion des Auftriebs (RB) von unter 1% für eine Mindestschaumdichte ($\rho$F) von 60 Kg/m$^3$ nach 30 Tagen Tauchzeit hat.

**15.** Die Struktur von einem der vorhergehenden Ansprüche, wobei der Schaumstoff eine Porosität von 95% oder geringer hat.

## Revendications

**1.** Structure flottante pour des applications d'éolienne offshore, la structure comprenant une coque qui, lors du fonctionnement, inclut une section immergée définissant au moins un espace intérieur ci-dedans, et un matériau à mousse disposé de façon à remplir au moins partiellement l'au moins un espace intérieur de la section immergée de la coque, avec ledit matériau à mousse ayant des caractéristiques qui varient graduellement d'au moins une parmi la densité de mousse ($\rho$F), la force de compression ($F_c$) et la réduction de la flottabilité (RB) en fonction de valeurs de la pression hydrostatique (HP) agissant sur la coque à des profondeurs données.

**2.** La structure de la revendication 1, dans laquelle la section immergée de la coque comprend un certain nombre d'espaces intérieurs.

**3.** La structure de la revendication 2, dans laquelle les espaces intérieurs sont disposés dans des niveaux contenus dans des plans différents.

**4.** La structure de la revendication 3, dans laquelle lesdits plans sont horizontaux.

**5.** La structure de l'une quelconque des revendications 2-4, dans laquelle le matériau à mousse est disposé dans au moins l'un desdits espaces intérieurs.

**6.** La structure de l'une quelconque des revendications précédentes, dans laquelle un espace intérieur de la section immergée de coque est destiné à être au moins partiellement rempli avec un matériau dont la densité est supérieure à celle de la densité de mousse (ρF).

7. La structure de la revendication 6, dans laquelle l'espace intérieur de la section immergée de coque destiné à être au moins partiellement rempli avec un matériau dont la densité est supérieure à celle de la densité de mousse (ρF) est disposé dans une région inférieure de la section immergée.

8. La structure de l'une quelconque des revendications précédentes, dans laquelle le matériau à mousse a une partie creuse formée ci-dedans.

9. La structure de l'une quelconque des revendications précédentes, dans laquelle l'extérieur de la coque est au moins partiellement recouvert avec le matériau à mousse.

10. La structure de l'une quelconque des revendications précédentes, dans laquelle l'espace intérieur de coque est rempli aussi avec un fluide sous pression.

11. La structure de l'une quelconque des revendications précédentes, dans laquelle la structure flottante comprend en outre un dispositif capteur de l'afflux de fluide.

12. La structure de l'une quelconque des revendications précédentes, dans laquelle le matériau à mousse comprend du polyuréthane.

13. La structure de l'une quelconque des revendications précédentes, dans laquelle la densité de mousse (ρF) est choisie de façon à résister une force de compression ($F_c$) en MPa donnée en fonction de la profondeur à laquelle l'espace intérieur de coque de la section immergée est situé de façon que la densité de mousse (ρF) en Kg/m$^3$ satisfait

$$\rho F = \left(\frac{1}{\alpha}\right) \cdot Fc + \beta,$$

avec $\alpha$ et $\beta$ allant de 10 à 20.

14. La structure de l'une quelconque des revendications précédentes, dans laquelle le matériau à mousse a une valeur de réduction de flottabilité (RB) inférieure à 1% pour une densité de mousse minimale (ρF) de 60 Kg/m$^3$ après 30 jours d'immersion.

15. La structure de l'une quelconque des revendications précédentes, dans laquelle le matériau à mousse a une porosité de 95 % ou inférieure.

# FIG. 1

**EP 3 176 429 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011057940 A2
- US 6021730 A